# EUROPEAN PATENT SPECIFICATION

(11) **EP 4 145 194 B1**
(45) Date of publication and mention of the grant of the patent: **24.12.2025**
(21) Application number: 21194664.5
(22) Date of filing: 02.09.2021
(51) Int. Cl.: G02B 5/30, G02B 27/28

(54) **POLARIZING BEAM SPLITTER**
POLARISIERENDER STRAHLTEILER
DIVISEUR DE FAISCEAU POLARISANT

(43) Date of publication of application: 08.03.2023
(73) Proprietor: Leica Microsystems CMS GmbH, 35578 Wetzlar (DE)
(72) Inventor: Eisenkrämer, Frank, 35606 Solms (DE); Günther, Steffen, 35576 Wetzlar (DE)
(74) Representative: Schaumburg und Partner Patentanwälte mbB

(56) References cited:
- US-A- 5 914 817
- US-A1- 2003 035 111
- US-A1- 2004 246 582
- US-A1- 2008 278 813
- US-A1- 2013 250 415

## Description

### Technical field

The present invention relates to a polarizing beam splitter comprising a beam splitting coating.

### Background

The field of nonlinear microscopy includes various methods, such as fluorescence microscopy, e.g. multiphoton excitation microscopy, coherent anti-Stokes Raman scattering microscopy (CARS), stimulated Raman scattering microscopy (SRS) as well as microscopic methods that detect higher harmonics of the excitation wavelength such as Second-Harmonic Generation microscopy (SHG) and Third-Harmonic (THG) Generation microscopy.

It is desirable to combine several of these methods in one setup and thus configure a so-called multimodal microscope. However, it is a challenge in a multimodal configuration to separate the detection light from the illumination light and/or to separate the detection light which is acquired in different microscopic methods as the light to be separated may overlap spectrally.

In the field of microscopy, there are basically two fundamentally different approaches to implement light separation. Firstly, a dichroic beam splitter may be used to separate different light components in terms of their spectral composition. For instance, an optical long-pass filter has a spectral filter characteristic according to which light with wavelengths greater than a predetermined spectral splitting edge are transmitted, while light with wavelengths smaller than the spectral edge are reflected. Such a dichroic beam splitter is usually based on an uncemented optical filter element. For instance, a dichroic beam splitter may be formed from a plane-parallel glass plate with a coating that comprises a layer structure for spectrally separating the incident light.

Secondly, a polarizing beam splitter may be used to separate different light components in terms of their polarization. Such a polarizing beam splitter has a polarization-dependent splitting characteristic according to which linearly polarized of one kind, e.g. parallel-polarized light (hereinafter "P-pol light") is transmitted, while linearly polarized light of the other kind, e.g. perpendicular-polarized light (hereinafter "S-pol light") is reflected, or vice versa. A polarizing a beam splitter is usually based on a cemented optical filter element comprising two prisms connected by a cement layer. A beam splitting coating is formed on a surface of one prism.

Conventional dichroic beam splitters and polarizing beam splitters each have their own particularities. For instance, a dichroic beam splitter does not have distinctly different properties in terms of reflection and transmission that are dependent on the polarization state of the light. Further, a dichroic beam splitter causes a beam offset due to refraction when the light propagates through the plane-parallel plate. On the other hand, with a cemented polarizing beam splitter, the transmission/reflection characteristics are more or less undefined outside a specific wavelength range which is designed for beam splitting dependent on the light polarization. In addition, the design wavelength range of a conventional polarizing beam splitter is spectrally broad. Furthermore, both dichroic and polarizing disputed splitters have an undefined group delay dispersion (GDD).

In fluorescence microscopy, such as multiphoton excitation microscopy, the separation of the excitation light and the detection light is usually achieved by dichroic beam splitters, which transmit at least one wavelength range while reflecting another. In microscopic methods like CARS as well as SHG and THG, dichroic beam splitters are utilized likewise for separating illumination light and detection light. In contrast, for instance in SRS microscopy, the detection light is in the same wavelength range as a part of the illumination light. Accordingly, a wavelength-dependent light separation using a dichroic beam splitter is not possible in SRS.

Thus, when using a single conventional beam splitter as explained above, it is difficult to combine different microscopic methods that apply, on the one hand, wavelength-dependent light separation such as multiphoton excitation microscopy, CARS, SHG, THG, and, on the other hand, polarization-dependent light separation such as SRS, without causing a significant loss of light.

US 5,914,817 discloses an optical filter provided for use in color projection display imaging systems. The optical filter comprises a color separating filter element having alternating layers of a dielectric coating. Thereby, a separation of light into rays of light having different colors is achieved. Further reference is made to documents US 2003/035111 A1, US 2004/246582 A1, US 2013/250415 A1, and US 2008/278813 A1.

### Summary

It is an object to provide a beam splitter which enables light separation with high light efficiency in a system combining different microscopic applications.

This object is achieved by the subject-matter according to the claim 1. Advantageous embodiments are disclosed in the dependent claims and the following description.

A polarizing beam splitter comprises a support element having a coupling surface and a beam splitting coating arranged on the coupling surface of the support element.

The beam splitting coating comprises a plurality of first layers having first refractive indices and a plurality of second layers having second refractive indices. The first layers and the second layers are arranged alternately, and the first refractive indices are smaller than the second refractive indices.

The beam splitting coating is designed to provide a sequence of refractive indices which alternate from relatively high to relatively low. Based on such a coating design, the polarizing beam splitter can be configured to operate virtually as a long-pass edge filter that has a broadened spectral edge where polarization splitting occurs. Thus, the polarizing beam splitter combines the functions of both a dichroic edge filter and a polarizer. Preferably, the support member is made of glass.

According to a preferred embodiment, the polarizing beam splitter comprises a first prism having a first coupling surface, and a second prism having a second coupling surface which faces the first coupling surface. The support element is formed by the second prism, and the coupling surface of the support element is formed by the second coupling surface. The beam splitting coating is arranged on the second coupling surface. Further, the polarizing beam splitter comprises a cement layer which is arranged between the coating and the first coupling surface. In this embodiment, the polarizing beam splitter is based on a design which comprises two cemented prisms and a beam splitting coating arranged therebetween. In such a configuration, an angle of incidence (AOI) of the light falling onto the beam splitting coating is preferably 45°.

Preferably, the first prism and/or the second prism are formed from optical glasses having a refractive index n(e) in a range from 1.4 to 2.2, wherein n(e) is equal to 1.5168 and e is equal to 546,0740 nm. For instance, N-BK7 is a suitable glass material.

According to an alternative embodiment, the polarizing beam splitter may be based on an uncemented filter design. In this case, an enlargement of the wavelength range where polarization splitting occurs can be achieved by selecting an angle of incidence which is significantly larger than 45° such as 60°. For instance, the polarizing beam splitter may be formed from a plane-parallel glass plate on which the beam splitting coating is arranged. However, compared to this alternative embodiment, a cemented configuration operating at an AOI of 45° may have benefits in terms of GDD. Furthermore, a reflecting beam guidance at 90° is secured which is preferred for most microscopic applications.

Preferably, the first and second layers form successive pairs of layers, wherein the first layer of each pair is closer to the second coupling surface than the second layer of the same pair. In this embodiment, the alternating sequence of refractive indices starts with a low refractive index from the second coupling surface of the polarizing beam splitter. However, a reversed sequence of refractive indices may also be envisaged.

According to a preferred embodiment, the first refractive indices are in a range from 1.3 to 4.5, more preferably in a range from 1.33 to 2.5, and most preferably in a range from 1.4 to 1.7. The second refractive indices may be in a range from 1.3 to 4.5, more preferably in a range from 1.33 to 2.5, and most preferably in a range from 1.9 to 2.4. The first layers may have first thicknesses in a range from 0.1 nm to 5000 nm, more preferably in a range from 2 to 1000 nm, and most preferably in a range from 10 nm to 400 nm. The second layers may have second thicknesses in a range from 0.1 to 5000 nm, more preferably in a range from 2 to 1000 nm, and most preferably in a range from 10 nm to 400 nm.

It is to be noted that the refractive indices are wavelength-dependent. The numerical values mentioned given above and below refer to n(e), wherein e is 546,0740 nm.

Preferably, the first and second thicknesses may selected such that the corresponding optical thicknesses are approximately in a range of λ/4, wherein individual optical layer thicknesses may also be smaller than λ/4. The reason for this is the modulation of the wavefront with regard to the desired reflection-transmission properties and with regard to the lowest possible GDD in the excitation light. Herein, λ designates the wavelength, and the optical thickness is the product of the geometric thickness and the refractive index.

According to a preferred embodiment, the first refractive indices are identical and/or the second refractive indices are identical. Providing the optical beam splitter with a sequence of refractive indices which alternate only between two values facilitates the filter design significantly.

Preferably, the first layers are made from SiO2. Alternatively, the first layers may be made from a metal fluoride or a metal oxide, in particular selected from a group including Cryolite, NbF3, Y2O3, CeF3, AlF3, LaF3, MgF2, YF3, YbF3, NaAIF3, and Al2O3.

Preferably, the second layers are made from ZnS. Alternatively, the second layers may be made from a metal fluoride or a metal oxide, in particular selected from a group including Y2O3, ITO, HfO2, Ta2O5, ZrO2, TiO2, and Nb2O5.

Material combinations with SiO₂ as low refractive material are particularly preferred. In this case, suitable partners for a desired refractive index contrast may be HfO₂, Ta₂O₅, TiO₂, Nb₂O₅ or ZnS. Accordingly, SiO₂/HfO₂, SiO₂/Ta₂O₅, SiO₂/TiO₂, SiO₂/Nb₂O₅, SiO₂/ZnS are preferred material combinations. The same applies when MgF₂ is selected as low refractive material. In this case, MgF₂/ZnS is a particularly preferred material combination.

According to a preferred embodiment, the first and second layers form multiple layer packages whose reflectances shift towards shorter wavelengths with increasing distance from the first coupling surface. In this embodiment, an extinction of light with short wavelengths can be avoided since a propagation path of the light passing through the coating is shortened. Thus, in case that the short-wavelength light is utilized in detection, loss of detection light due to absorption can be avoided.

Preferably, the cement layer has a refractive index in a range from 1.0 to 2.0, more preferably in a range from 1.33 to 1.7, and most preferably in a range from 1.41 to 1.7. Preferably, the cement layer has in a thickness in a range from 500 µm to 10 nm, more preferably in a range from 1 µm to 50 µm, and most preferably in a range from 5 µm to 25 µm. In case that the refractive index of the cement layer is relatively large, P-pol light is only weakly reflected by the cement layer. Accordingly, if light is to be transmitted by the polarizing beam splitter for illuminating a sample, the light is preferably P-pol light.

According to a preferred embodiment, the first and second prisms are each formed from a triangular prism, a hypotenuse face thereof forming the respective coupling surface.

The coating is configured to transmit light of at least a first polarization state in a first wavelength range. The first wavelength range may be used for transmitting illumination light. Then, the illumination light is preferably P-pol light. The coating is configured to reflect light of a second polarization state, which is different from the first polarization state, in a short-wavelength sub-range of the first wavelength range. This sub-range can be used e.g. for separating illumination light and detection light in a microscopic application where illumination and detection overlap spectrally such as in SRS. If the first polarization is P-pol, the second polarization may be S-pol. Accordingly, the short wavelength sub-range of the first wavelength is provided to cause a polarizing splitting of the light. In this sub-range, the beam splitter acts as a polarizer. The coating is configured to reflect light of both the first polarization state the second polarization state in a second wavelength range which is different from the first wavelength range. Assumed that the first polarization state is P-pol and the second polarization state is S-pol, the coating reflects random-polarized light ("R-pol" hereinafter), which is a random superposition of P-pol light and S-pol light, in the second wavelength range.

The first wavelength range includes longer wavelengths than the second wavelength range. In this case, the first wavelength range may be e.g. used to reflect detection light towards a detector.

Preferably, the short-wavelength sub-range of the first wavelength range may have a spectral with of at least 50 nm, more preferably a spectral width of 100 nm, and most preferably a spectral width of 130 nm. Furthermore, a maximum of the spectral width of the short-wavelength sub-range of the first wavelength range may be at 500 nm.

Preferably, the coating is configured to reflect light entering the polarizing beam splitter through the first prism and to transmit light entering the polarizing beam splitter through the second prism.

According to preferred embodiment, the coating is configured to transmit and reflect light incident on the coating at an angle of 45°. Furthermore, the group delay dispersion is preferably in a range of +/- 500 fs².

### Short Description of the Figures

Hereinafter, specific embodiments are described referring to the drawings, wherein:
- Fig. 1: is a schematic view of a polarizing beam splitter according to an embodiment,
- Fig. 2: is a schematic view of a layer structure of the polarizing beam splitter according to the embodiment,
- Fig. 3: is a diagram showing an alternating sequence of refractive indices of the layer structure according to the embodiment,
- Fig. 4: is a diagram showing a wavelength-dependent transmission/reflection characteristic of the beam splitter according to the embodiment,
- Fig. 5: is a diagram showing wavelength-dependent reflection characteristics of multiple layer packages included in the layer structure of the beam splitter according to the embodiment with respect to R-pol light,
- Fig. 6: is a diagram showing wavelength-dependent transmission characteristics of the layer packages included in the layer structure of the beam splitter according to the embodiment with respect to S-pol light,
- Fig. 7: is a diagram showing wavelength-dependent transmission characteristics of the layer packages included in the layer structure of the beam splitter according to the embodiment with respect to P-pol light,
- Fig. 8: is a diagram showing a wavelength-dependent transmission characteristic of a beam splitter according to another embodiment,
- Fig. 9: is a diagram showing a wavelength-dependent transmission/reflection characteristic of a polarizing beam splitter according to a comparative example,
- Fig. 10: is a diagram showing a wavelength-dependent transmission characteristic of a dichroic beam splitter according to another comparative example,
- Fig. 11: is a schematic view of an optical apparatus with a light separating device including a polarizing beam splitter according to an embodiment.

### Detailed Description

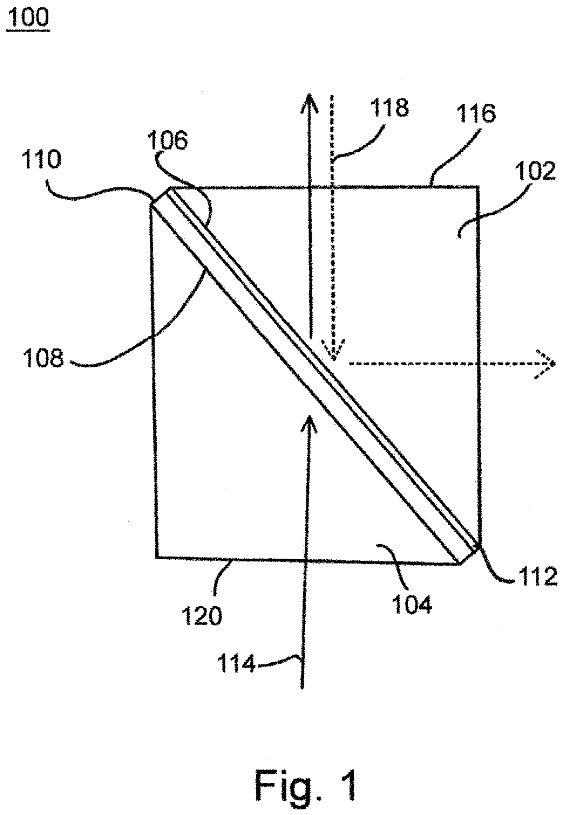

Figure 1 is a schematic view of a polarizing beam splitter 100 according to an embodiment. The polarizing beam splitter 100 is formed from a cemented optical element which includes a first prism 102 and a second prism 104. Each of the first and second prisms 102, 104 may be formed from a triangular prism, wherein a hypotenuse face of one prism faces a hypotenuse face of the other prism. Specifically, the hypotenuse face of the first prism 102 is formed from a first coupling surface 106, and the hypotenuse face of the second prism 104 is formed from a second coupling surface 108.

The polarizing beam splitter 100 comprises a beam splitting coating 110. In the embodiment shown in Figure 1, the beam splitting coating 110 is arranged on the second coupling surface 108 of the second prism 104. Accordingly, the second prism 104 forms a support element for the beam splitting coating 110. As explained below in more detail, the beam splitting coating 110 is formed from a layer structure comprising a plurality of layers which form a dielectric interference filter that provides specific wavelength-dependent transmission/reflection characteristics through constructive interference. The polarizing beam splitter 100 further includes a cement layer 112 which is arranged on the first coupling surface 106 of the first prism 102. The cement layer 112 serves to bond the coating 110 to the first prism 102.

According to the specific example shown in Figure 1, it is assumed that light 114 enters the polarizing beam splitter 100 from below through a lower surface 120 of the second prism 104 and is transmitted upwards through the polarizing beam splitter 100 to exit from an upper surface 116 of the first prism 102. It is further assumed by way of example that the light 112 is emitted from an illumination unit to illuminate a sample which is located above the polarizing beam splitter 100 in Figure 1 (both the illumination unit and the sample are not shown in Figure 1). Further, detection light 118 emerging from the sample enters the beam splitter 100 through the upper surface 116 of the first prism 102 to be reflected to the right in Figure 1.

Both the illumination light 112 and the detection light 118 enter the polarizing beam splitter 100 at an angle of 90° with respect to the lower surface 120 and the upper surface 116, respectively. The illumination light 112 transmits the coating 110 and the cement layer 112 at an angle of 45°. In other words, a propagation direction of the illumination light 112 and a direction perpendicular to the cement layer 112 and the coating 110 enclose an angle of 45°. Likewise, the detection light 118 is reflected by the coating 110 at an angle of 45°. An angular tolerance is about +/- 2.5°.

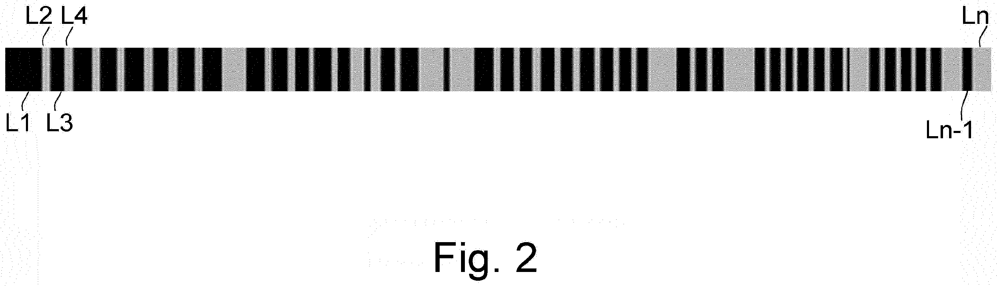

Hereinafter, a specific example of the beam splitting coating 110 is described with reference to Figures 2 to 7.

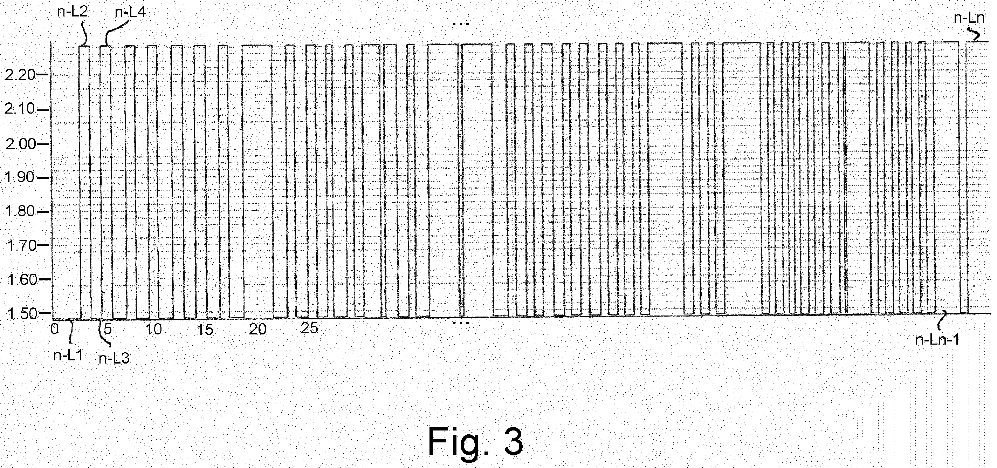

Figure 2 shows a specific embodiment of a layer structure forming the beam splitting coating 110, and Figure 3 shows a diagram illustrating an alternating sequence of refractive indices of the layer structure of Figure 2. As shown in Figures 2 and 3, the beam splitting coating 110 comprises a plurality of first layers L1, L3, ..., Ln-1 having first refractive indices n-L1, n-L3, ..., Ln-1 and a plurality of second layers L2, L4, ..., Ln having second refractive indices n-L2, n-L4, ..., n-Ln. Within the coating 110, the first layers and the second layers are arranged in an alternating sequence, i.e. the first layer L1 is followed by the second layer L2, the second layer L2 is followed by the next first layer L3, the next first layer L3 is followed by the next second layer L4, and so forth. Thus, according to the present example, the first layers L1, L3, ..., Ln-1 are designated by odd subscripts 1, 3, ..., n-1, while the second layers are designated by even subscripts 2, 4, ..., n (where n is an even integer). The beam splitting coating 110 comprises in total eighty-four layers, i.e. forty-two first layers L1, L3, ..., Ln-1 and forty-two second layers L2, L4, ..., Ln. In the present example, it is further assumed that the very first layer L1 of the coating 110 is arranged on the coupling surface 108 of the second prism 104, while the very last layer Ln of the coating 110 faces the cement layer 112 which is arranged on the first coupling surface 106 of the first prism 102.

According to the present embodiment, the first refractive indices n1, n3, ..., n-Ln-1 of the first layers L1, L3, ..., Ln-1 are smaller than the second refractive indices n2, n4, ..., n-Ln of the second layers L2, L4, ..., Ln. In particular, the first refractive indices n1, n3, ..., n-Ln-1 of the first layers L1, L3, ..., Ln-1 may be identical. According to the example shown in Figures 2 and 3, each of the first refractive indices n1, n3, ..., n-Ln-1 of the first layers L1, L3, ..., Ln-1 has a value of about 1.48. Likewise, the second refractive indices n2, n4, ..., n-Ln of the second layers L2, L4, ..., Ln may be identical. According to the example shown in Figures 2 and 3, each of the second refractive indices n2, n4, ..., n-Ln of the second layers L2, L4, ..., Ln has a value of about 2.28.

As can be seen from Figures 2 and 3, the thicknesses of the first layers L1, L3, ..., Ln-1 may vary. According to the present embodiment, the thicknesses of the first layers L1, L3, ..., Ln-1 vary in a range from 21.6 nm to 371.5 nm. Likewise, the thicknesses of the second layers L2, L4, ..., Ln may vary. According to the present embodiment, the thicknesses of the second layers L2, L4, ..., Ln are in a range from 45.5 nm to 320.4 nm.

In this example, each of the first layers L1, L3, ..., Ln-1 of the coating 110 is made from from SiO₂, while each of the second layers L2, L4, ..., Ln of the coating 110 is made from ZnS. Further, the cement layer 110 is made from an epoxy-glue and has a thickness of around 20 µm . The refractive index of cement layer 110 is 1.52.

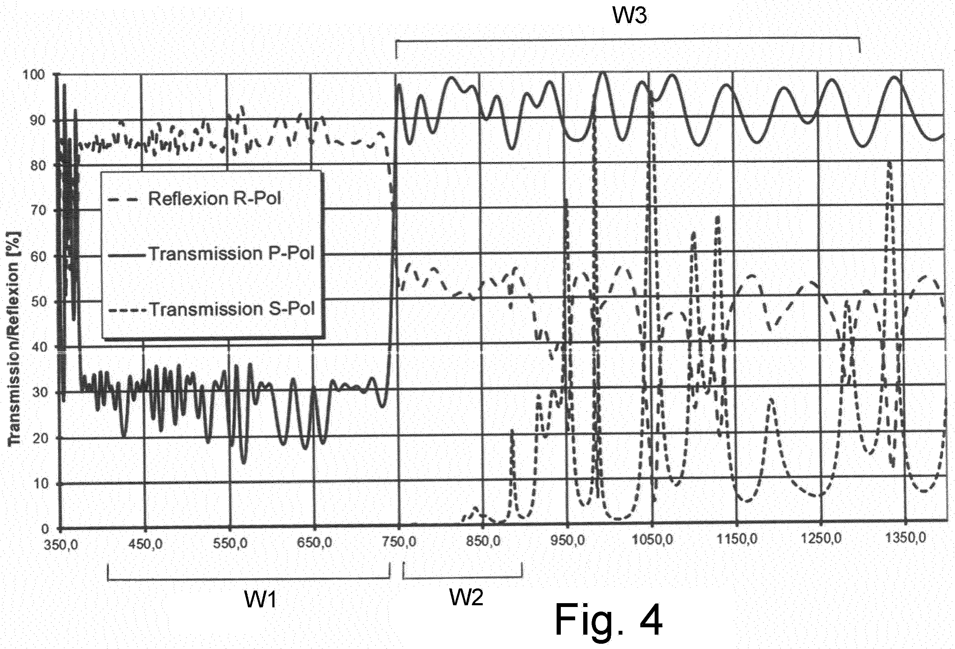

Figure 4 is a diagram illustrating a transmission/reflection characteristic which is achieved by the beam splitting coating 110 according to the specific example shown in Figures 2 and 3.

As can be seen from the transmission/reflection characteristic in Figure 4, the beam splitting coating 110 is configured to predominantly transmit at least P-pol light in a first wavelength range W3 including longer wavelengths from about 750 nm to 1300 nm. In this example, more than 80% of the P-pol light in the wavelength range W3 is transmitted by the beam splitting coating 110.

The beam splitting coating 110 is further configured to predominantly reflect S-pol light in a short-wavelength sub-range W2 of the first wavelength range. This can be seen from Figure 4 where the transmission with respect to S-pol light is low in the short-wavelength sub-range W2 which includes wavelength from about 750 nm to 900 nm. Low S-pol transmission implies high S-pol reflection in W2.

In addition, the beam splitting coating 110 is configured to predominantly reflect both P-pol light and S-pol light in a second wavelength range W1 which is different from the first wavelength range W3. As result, R-pol light, which is a random superposition of P-pol- light and S-pol light, is predominantly reflected in the wavelength range W3 including shorter wavelengths from about 400 nm to 750 nm.

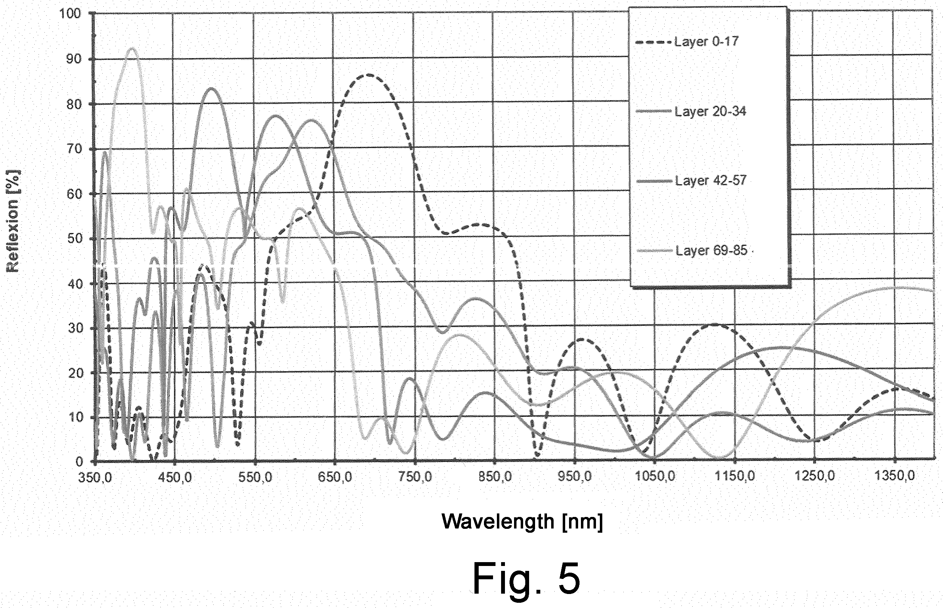

The first layers and the second layers may form multiple layer packages whose reflection and transmission characteristics are illustrated in Figures 5 to 7. In the present example, it is assumed that the layers from L1 to L17 form a first layer package, the layers from L20 to L34 form a second layer package, the layers from L42 to L57 form a third layer package, and the layers from L69 to L84 form a fourth layer package.

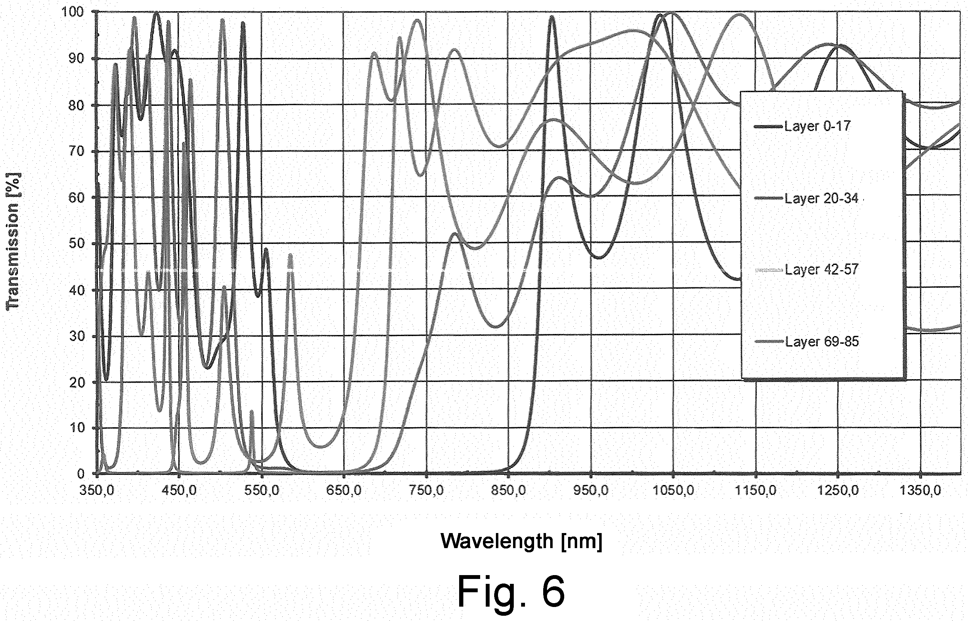

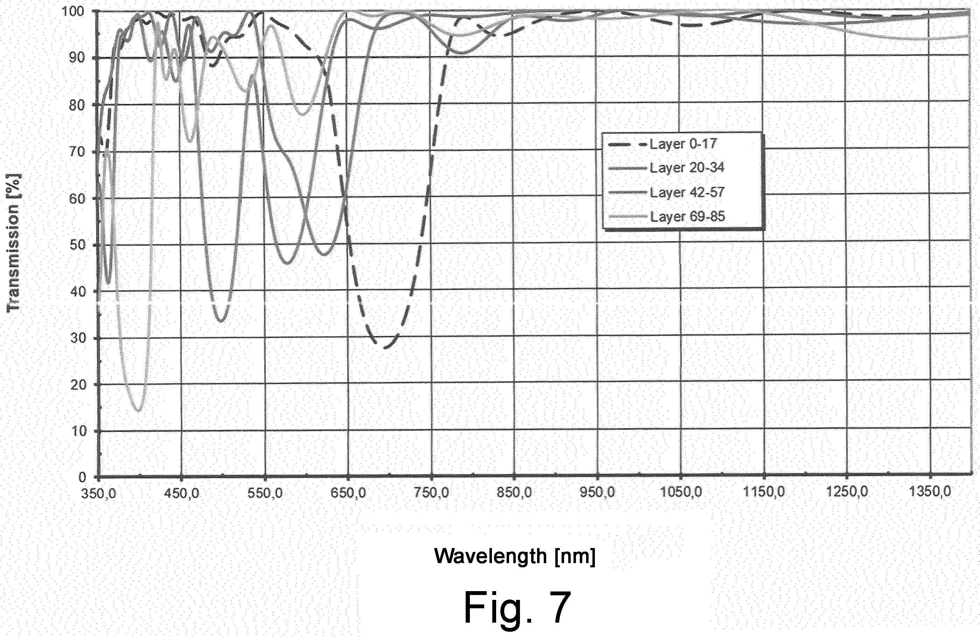

The diagram of Figure 5 illustrates wavelength-dependent reflection characteristics of the layer packages mentioned above with respect to R-pol light. As can be seen from Figure 5, the reflections of the layer packages shift towards shorter wavelengths with increasing distance from the coupling surface 108 of the second prism 104 of the polarizing beam splitter 100. Thus, according to the present embodiment, the first layer package L1 to L17 is closer to the second coupling surface 108 than the second layer L20 to L34. Comparing the reflection characteristics of the first layer package L1 to L17 and the second layer package L20 to L34, it is evident that the reflectance of the second layer package L20 to L34 is shifted towards shorter wavelengths when compared to the reflectance of the first layer package L1 to L17. Likewise, the reflectance of the third layer package L42 to L57 is shifted towards shorter wavelengths when compared to the reflectances of the first and second layer packages, and the reflectance of the fourth layer package L69 to L84 L57 is shifted towards shorter wavelengths when compared to the reflectances of the first, second, and third layer packages. It is to be noted that in Figure 5 (and correspondingly in Figures 6 and 7), the layers 0 and 85 refer to the media adjacent to the actual layer structure.

The reflection characteristics of the layer packages included in the coating 110 is beneficial when considering the extinction of light that passes through the coating 100. Thus, extinction increases with shorter wavelengths. According to the present embodiment, the reflection characteristics of Figure 5 is selected such that those layer packages of the coating 110, which are further away from the coupling surface 108 of the second prism 104, i.e. closer to the cement layer 112, have larger reflectance with respect to short wavelengths. Taking into account that the detection light 118 (see Figure 1) enters the coating 110 from the side of the cement layer 112, it is ensured that the detection light 118 first reaches those layer packages of the coating 110 that reflect predominantly short wavelengths. Therefore, a considerable part of the detection light 118 has to propagate only a short optical path through the coating 110 before being reflected. As a result, a loss of detection light 118 due to absorption can be avoided.

Furthermore, when using P-pol light as illumination light 114 (see Figure 1), the coating 110 according to the embodiment is beneficial in terms of transmitting the illumination light 114 in the wavelength range W3. Thus, the cement layer 106 has a relatively large refractive index with respect to air, and due to this large refractive index, only a small amount of the P-pol detection light 118 is reflected by the cement layer 106. On the other hand, the relatively large number of layers forming the coating 110 enables the intended reflection of R-pol detection light 118 in the wavelength range W1 as well as the intended polarization splitting between P-pol light and S-pol light in the short-wavelength sub-range W1 of the wavelength range W3.

It is to be noted that the embodiment described above with reference to Figures 2 to 7 is only a specific example, and various modifications are possible. For example, the order of alternating small and large refractive indices may well be reversed. Further, the relative arrangement of the coating 110 and cement layer 106 may be reversed so that, in contrast to Figure 1, the illumination light 114 first enters the cement layer 106 first, while the detection light 118 enters the coating 110 first.

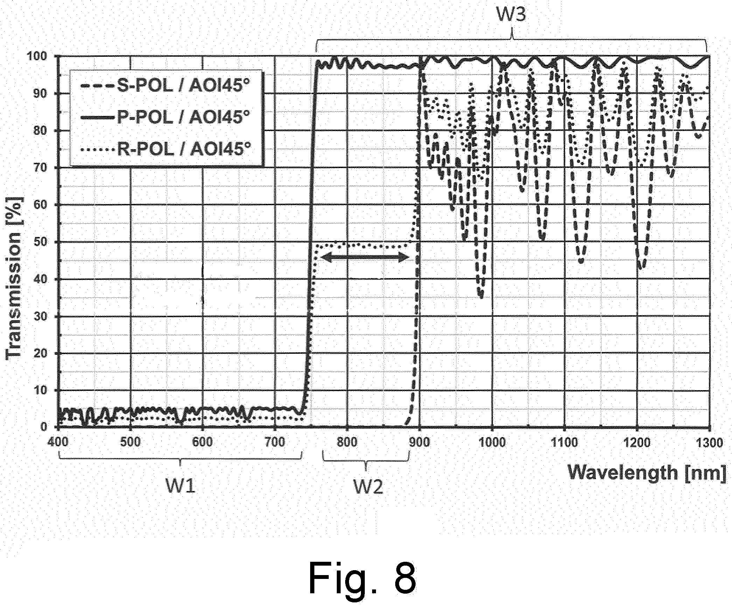

Furthermore, the intended transmission/reflection characteristics can be further improved by refining the coating design in particular in terms of the number of coating layers as illustrated in Figure 8.

Figure 8 shows a wavelength-dependent transmission characteristic according to another embodiment that uses about 150 layers instead of 84 layers. It can be seen from Figure 8 that an alternating sequence of small refractive indices and large refractive indices implemented by a such large number of layers increases the transmission of P-pol light in the wavelength range W3 to almost 100%, while it reduces the transmittance of R-pol light in the wavelength range W1 to almost 0% which implies a complete reflection of R-pol light in W1 as intended. Further, Figure 8 shows a 50% transmission with respect to R-pol light in the short-wavelength sub-range W2 of W3 which implies an almost perfect polarization splitting between P-pol light and S-pol light in W2. As indicated in Figure 8, the sub-range W2 may be used e.g. in an SRS application, whereas the wavelength range W1 is suitable for detecting light in a multiphoton excitation application.

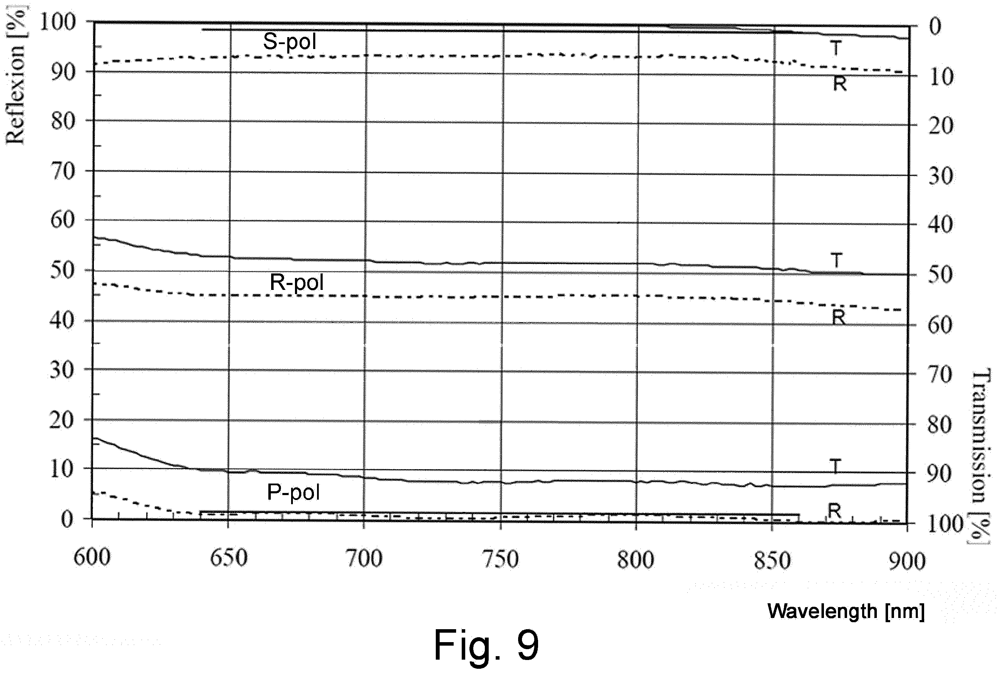

Figure 9 shows a wavelength-dependent transmission/reflection characteristic of a polarizing beam splitter according to a comparative example that is conventionally used for separating light in terms of its polarization. Such a polarizing beam splitter is also based on a cemented optical filter element which comprises two prisms connected by a cement layer. However, as can be clearly seen from Figure 9, the wavelength range, in which polarization splitting occurs, is too wide to use the polarizing beam splitter in the way described herein. In Figure 9, T and R indicate the transmission and the reflection for the respective polariazation.

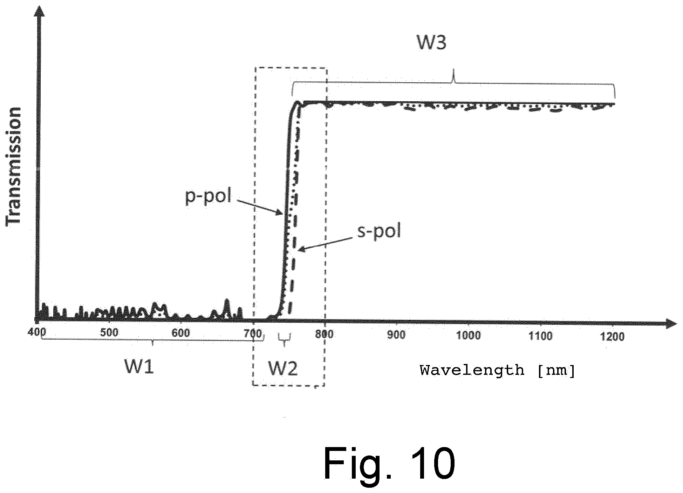

Figure 10 shows a wavelength-dependent transmission characteristic of a dichroic beam splitter according to another comparative example. In contrast to the comparative example shown in Figure 9, the dichroic beam splitter is conventionally used to separate light with regard to its spectral composition. The dichroic beam splitter exhibits a polarizing splitting effect in W2 to some extent. However, the spectral with of W2 is very small and therefore not suitable to be utilized in a specific application such as SRS.

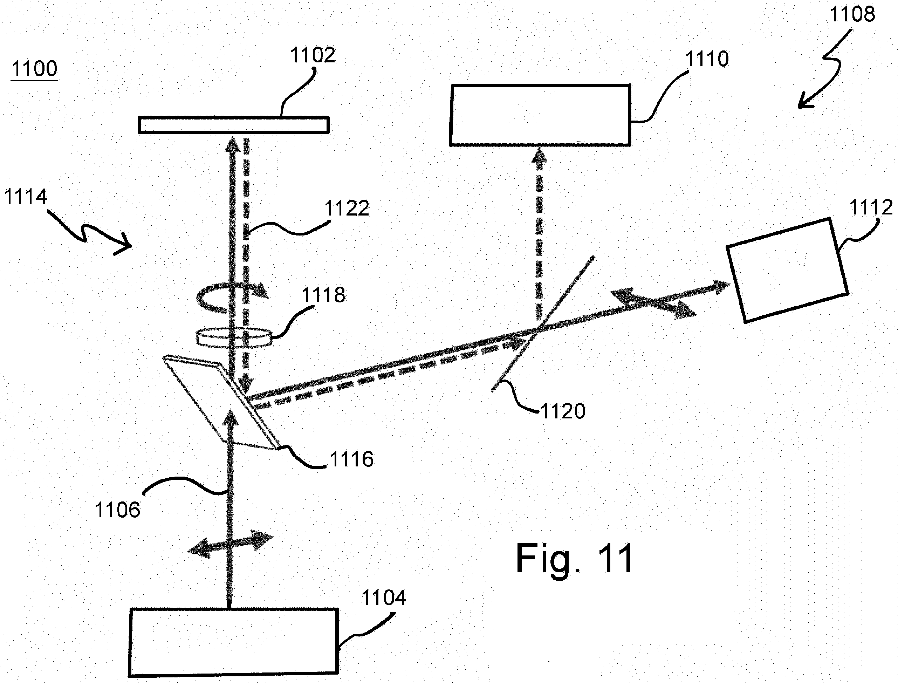

Figure 11 shows an embodiment that uses a polarizing beam splitter as described above to separate illumination light and detection light in a microscopic application.

Figure 1 is a schematic view of an optical apparatus 1100 according to an embodiment. The optical apparatus 1100 may be configured as a multimodal microscope to examine a sample 1102 according to multiple microscopic methods. Without being limited thereto, the optical apparatus 1100 may serve to combine different microscopic applications such as, on the one hand, fluorescence microscopy, e.g. multiphoton excitation microscopy, CARS, SHG, and THG which use different wavelength ranges for illumination and detection, and, on the other hand, SRS which in contrast uses partially overlapping wavelengths for illumination and detection. It is to be noted that Figure 11 is a simplified illustration showing only those components of the optical apparatus 1100 which are helpful to understand the operating principle.

The optical apparatus 1100 includes an illumination unit 1104 which may comprise one or more laser light sources configured to emit illumination light 1106. For example, one or more short-pulse lasers can be used for generating the illumination light 1106. Laser light sources with different pulse lengths in the sub-picosecond range and also above one picosecond can be used. In case of multiple laser light sources, the illumination unit 1104 may include one or more beam combining elements such as a dichroic beam combiner to form a single illumination beam from a plurality of laser beams of different wavelengths.

The optical apparatus 1100 further comprises a detection unit 1108 that is configured to collect detection light 1122 from the sample 1102. The detection unit 1108 may comprise multiple detectors 1110, 1112 in accordance with the different microscopic applications that are combined in the multimodal microscope. For instance, in case of SRS, the detector 1112 may include a lock-in amplifier which is configured to acquire an SRS signal from the detection light 1122.

The optical apparatus 1100 includes a light separating device 1114 which serves to separate the illumination light 106 and the detection light 122 with regard to wavelength and polarization. To this purpose, the light separating device 1114 comprises a polarizing beam splitter 1116 that has both dichroic-splitting properties and polarization-splitting properties as explained above in particular with regard to Figures 4 to 8.

The optical apparatus 1100 comprises a wave plate 1118. According to the embodiment shown in Figure 11, the wave plate 1118 is configured as quarter-wave plate. Furthermore, in an optical path of the detection light 1122 reflected by the beam splitter 1116, a dichroic beam splitting element 1120 is provided. The dichroic beam splitting element 1120 is configured to spectrally split the detection light 1122 into light components of different wavelengths in accordance with the different microscopic applications that are combined in the multimodal microscope. A spectral component of the detection light 1122 transmitted by the dichroic beam splitting element 1120 propagates towards the detector 112 that is used in the SRS mode. In contrast, a spectral component of the detection light 1122 reflected by the dichroic beam splitting element 1120 propagates towards the detector 1110 that is used in the other microscopic modes.

According to the embodiment shown in Figure 11, the illumination unit 1104 emits illumination light 1106 in a linearly polarized state towards the beam splitter 1116. To this purpose, the illumination unit 1104 may comprise a wave plate (not shown in Figure 11) such as a half-wave plate which converts the laser light into linearly polarized light.

Hereinafter, it is assumed by way of example that the illumination unit 1104 generates the illumination light 1106 as P-pol light which is first directed onto the beam splitter 1116 and then emitted onto the sample 1102. Based on this exemplary assumption, the beam splitter 1116 is configured to have wavelength-dependent and polarization-dependent splitting characteristics as explained above.

According to the present embodiment, it is assumed that the illumination unit 1104 is configured to emit the illumination light 1106 in the wavelength range W3. As shown by way of example in Figures 4 and 8, the illumination wavelength range W3 may be from about 750 nm to 1300 nm. Further, it is assumed that the detection light 1122 is in a wavelength range e.g. from about 400 to about 900 nm as illustrated Figures 4 and 8. Accordingly, the illumination wavelength range W3 and the detection wavelength range partially overlap in an intermediate wavelength range W2 which is from 750 nm to 900 nm in this example. In Figures 4 and 8, the detection wavelength range excluding the intermediate wavelength range W2 is referred to as W1.

Furthermore, "AOI45°" in Figure 8 indicates that the angle of incidence is 45° in the present embodiment.

In the present embodiment, it is assumed that the wavelength range W3 is used for illumination both in a first mode such as multiphoton excitation microscopy, CARS, SHG and THG, and in a second mode such as SRS. It is further assumed that in multiphoton excitation microscopy, CARS, SHG and THG the wavelength of the detection light 1122 is in the wavelength range W1. In SRS, the wavelength of the detection light 1122 is in the wavelength range W2. Thus, in SRS, the illumination light 1106 and the detection light 1122 spectrally overlap in the intermediate wavelength range W2. In contrast, in multiphoton excitation microscopy, CARS, SHG and THG, the illumination light 1106 and the detection light 122 are spectrally separated.

Accordingly, three successive wavelength bands from shorter to longer wavelengths can be distinguished. A first wavelength band is given by the illumination wavelength range W3 excluding the intermediate wavelength range W2. Hereinafter, the first wavelength band is referred to as W3-W2 ("W3 minus W2"). A second wavelength band is identical to the intermediate wavelength range W2 where the detection wavelength range W1 and the illumination wavelength range W3 spectrally overlap. A third wavelength band is given by the detection wavelength range excluding the intermediate wavelength range W2, i.e. without the wavelength range W2 that is associated with the SRS detection. Thus, the third wavelength band is identical to the wavelength range W1, and the entire detection wavelength range may be referred to as W1+W2 ("W1 plus W2").

Under this exemplary assumptions, the transmission characteristic of the beam splitter 1116, which depends on both wavelength and polarization, is preferably selected as shown in Figures 4 and 8. Thus, in the first wavelength band W3-W2, the beam splitter 1116 has a first splitting characteristic according to which P-pol light is transmitted. In the second wavelength band W2, the beam splitter 1116 has a second splitting characteristic according to which P-pol light is transmitted and S-pol light is reflected. In the third wavelength band W1, the beam splitter 1116 has a third splitting characteristic according to which both P-pol light and S-pol light are reflected.

The second and third splitting characteristics define a combined splitting characteristic in the detection wavelength range W1+W2 that enables the entire detection light 1122 to be supplied to the detection unit 1108, regardless of the mode applied. This is achieved by reflecting both P-pol light and light S-pol light in the first wavelength band W1 which is provided in the mode for multiphoton excitation microscopy, CARS, SHG or TSG mode, and by transmitting P-pol light and reflecting S-pol light in the SRS mode. In particular, the second splitting characteristic in the second wavelength band W2 ensures that randomly polarized light ("R-pol"), which is considered to be a superposition of P-pol light and S-pol light, is transmitted and reflected in the intended manner.

Furthermore, it is evident from the splitting characteristic shown in Figures 4 and 8 that the first splitting characteristic in the first wavelength band W3-W2 is only determined with respect to P-pol light which is transmitted almost 100%. In contrast, the first splitting characteristic is not required to be determined with respect to S-pol light as can be seen from the fluctuations of the S-pol light in the first wavelength band W3-W2.

Taking into account the unique splitting characteristics of the beam splitter 1116, the optical apparatus 1100 operates as follows:
The illumination unit 1104 emits the P-pol illumination light 1106 in the illumination wavelength range W3 towards the beam splitter 1116 which transmits the P-pol illumination light 1106. When passing through the quarter-wave plate 1118 towards the sample 11102, the P-pol illumination light 1106 is converted into circularly polarized light.

In the first wavelength band W1, the detection light 1122 emerging from the sample 1102 is unpolarized at least in case of fluorescence light. In the first wavelength band W1, the entire detection light 1122 is reflected by the beam splitter 1116 towards the dichroic beam splitting element 1120 regardless of its polarization. Furthermore, the dichroic splitting element 1120 is configured to reflect the detection light 122 in the first wavelength band W1 towards the detector 1110. Accordingly, in microscopic applications such as multiphoton excitation microscopy, CARS, SHG and THG, where the illumination light 1106 and the detection light 1122 are included in the spectrally separated, i.e. non-overlapping wavelength ranges W3 and W1, respectively, the beam splitter 1116 operates as a dichroic beam splitter which is configured to separate the illumination light 1106 and the detection light 1122 with respect to their wavelengths.

In contrast, in a microscopic application such as SRS, where the illumination light 1106 and the detection light 1122 spectrally overlap in the intermediate wavelength range W2, the beam splitter 1116 operates as a polarizing beam splitter which is configured to separate the illumination light 1106 and the detection light 1122 with respect to their polarizations. Thus, in the SRS mode, the detection light 1122 emerges from the sample 1102 as circularly polarized light. As it passes through the quarter-wave plate 1118, the circularly polarized detection light 1122 is converted into linearly polarized light, more specifically in S-pol light in this example.

Accordingly, the polarization of the S-pol detection light 1122 in the second wavelength band W2 is rotated by 90° with respect to the P-pol illumination light 1106 in the wavelength band W2. Since the polarization is rotated by 90° relative to the illumination light 1106, the detection light 1122 is reflected by the beam splitter 1116 in the second wavelength band W2 which is the intermediate wavelength range where the illumination wavelength range W3 and the detection wavelength range W1+W2 spectrally overlap. The dichroic splitting element 1120 is configured to transmit light in the second wavelength band W2 towards the detector 1112. Thus, according the embodiment shown in Figure 11, S-pol detection light 1122 is transmitted in the second wavelength band W2 onto the detector 1112.

As can be seen from Figures 4 and 8, the beam splitter 1116 has a splitting edge which is defined by the intermediate wavelength range W2. Thus, the splitting edge determines a wavelength range in which the polarization splitting occurs. In the present example, the splitting edge is defined by a lower wavelength at around 750 nm and a longer wavelength at around 900nm. Accordingly, the spectral width of the splitting edge is about 150 nm and therefore adapted to a wavelength range suitable for SRS.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of Reference Signs

- 100: polarizing beam splitter
- 102: prism
- 104: prism
- 106: coupling surface
- 108: coupling surface
- 110: coating
- 112: cement layer
- 114: illumination light
- 116: upper surface
- 118: detection light
- 120: lower surface
- 1100: optical apparatus
- 1102: sample
- 1104: illumination unit
- 1108: detection unit
- 1110: detector
- 1112: detector
- 1114: light separating device
- 1116: beam splitter
- 1118: wave plate
- 1120: dichroic splitting element
- 1122: detection light
- L1 to Ln: layers
- N1 to Ln: refractive indices

## Claims

1. A polarizing beam splitter (100), comprising:
a support element (104), preferably made of glass and having a coupling surface (108), and
a beam splitting coating (110) arranged on the coupling surface (108) of the support element (104),
wherein the beam splitting coating (110) comprises a plurality of first layers having first refractive indices and a plurality of second layers having second refractive indices, the first layers and the second layers being arranged alternately and the first refractive indices being smaller than the second refractive indices
wherein the coating (110) is configured to transmit light of at least a first polarization state (p-pol) in a first wavelength range (W3),
**characterised in that**
the coating (110) is configured to reflect light of a second polarization state (s-pol), which is different from the first polarization state (p-pol), in a short-wavelength sub-range (W2) of the first wavelength range (W3),
wherein the coating (110) is configured to reflect light of both the first polarization state (p-pol) and the second polarization state (s-pol) in a second wavelength range (W1) which is different from the first wavelength range (W3), and
wherein the first wavelength range (W3) includes longer wavelengths than the second wavelength range (W1).

2. The polarizing beam splitter (100) according to claim 1, comprising:
a first prism (102) having a first coupling surface (106),
a second prism (104) having a second coupling surface (108) which faces the first coupling surface (106), wherein the support element is formed by the second prism (104) and the coupling surface of the support element is formed by the second coupling surface (108),
wherein the beam splitting coating (110) is arranged on the second coupling surface (108), and
a cement layer (112) arranged between the beam splitting coating (110) and the first coupling surface (106).

3. The polarizing beam splitter (100) according to claim 2, wherein the first and second layers form successive pairs of layers, the first layer of each pair being closer to the second coupling surface (108) than the second layer of the same pair.

4. The polarizing beam splitter (100) according one of the preceding claims, wherein the first refractive indices are in a range from 1.3 to 4.5,
the second refractive indices are in a range from 1.3 to 4.5,
the first layers have first thicknesses in a range from 0.1 nm to 5000 nm, and
the second layers have second thicknesses in a range from 0.1 nm to 5000 nm

5. The polarizing beam splitter (100) according one of the preceding claims, wherein the first refractive indices are identical and/or the second refractive indices are identical.

6. The polarizing beam splitter (100) according to one of the preceding claims, wherein the first layers are made from SiO2, or the first layers are made from a metal fluoride or a metal oxide, in particular selected from a group including Cryolite, NbF₃, Y₂O₃, CeF₃, AlF₃, LaF₃, MgF₂, YF₃, YbF₃, NaAlF₃, and Al₂O₃.

7. The polarizing beam splitter (100) according to one of the preceding claims, wherein the second layers are made from ZnS, or the second layers are made from a metal fluoride or a metal oxide, in particular selected from a group including Y₂O₃, ITO, HfO₂, Ta₂O₅, ZrO₂, TiO₂, and Nb₂O₅.

8. The polarizing beam splitter (100) according to one of the claims 2 to 7, wherein the first and second layers form multiple layer packages whose reflectances shift towards shorter wavelengths with increasing distance from the first coupling surface (106).

9. The polarizing beam splitter (100) according to one of the claims 2 to 8, wherein the cement layer (112) has a refractive index in a range from 1.0 to 2.0 and a thickness in a range from 500 µm to 10 nm.

10. The polarizing beam splitter (100) according to one of the claims 2 to 9, wherein the first and second prisms (102, 104) are each formed from a triangular prism, a hypotenuse face thereof forming the respective coupling surface (106, 108).

11. The polarizing beam splitter (100) according any one of the preceding claims, wherein the short-wavelength sub-range (W2) of the first wavelength range (W3) has a spectral width of at least 50 nm.

12. The polarizing beam splitter (100) according to one of the claims 2 to 11, wherein the coating (110) is configured to reflect light entering the polarizing beam splitter (100) through the first prism (102) and to transmit light entering the polarizing beam splitter (100) through the second prism (B).

13. The polarizing beam splitter (100) according to one of the preceding claims, wherein the coating (110) is configured to transmit and reflect light incident on the coating (110) at an angle of 45°.

## Patentansprüche

1. Polarisierender Strahlteiler (100), umfassend:
ein Stützelement (104), das vorzugsweise aus Glas hergestellt ist und eine Kopplungsfläche (108) aufweist, und
eine Strahlteilungsbeschichtung (110), die auf der Kopplungsfläche (108) des Stützelements (104) angeordnet ist,
wobei die Strahlteilungsbeschichtung (110) eine Vielzahl von ersten Schichten, die erste Brechungsindizes aufweisen, und eine Vielzahl von zweiten Schichten, die zweite Brechungsindizes aufweisen, umfasst,
wobei die ersten Schichten und die zweiten Schichten abwechselnd angeordnet sind und die ersten Brechungsindizes kleiner als die zweiten Brechungsindizes sind, wobei die Beschichtung (110) so konfiguriert ist, dass sie Licht von mindestens einem ersten Polarisationszustand (p-pol) in einem ersten Wellenlängenbereich (W3) überträgt, **dadurch gekennzeichnet ist, dass**
die Beschichtung (110) so konfiguriert ist, dass sie Licht eines zweiten Polarisationszustands (s-pol), der vom ersten Polarisationszustand (p-pol) unterschiedlich ist, in einem Kurzwellen-Teilbereich (W2) des ersten Wellenlängenbereichs (W3) reflektiert,
wobei die Beschichtung (110) so konfiguriert ist, dass sie Licht sowohl des ersten Polarisationszustands (p-pol) als auch des zweiten Polarisationszustands (s-pol) in einem zweiten Wellenlängenbereich (W1), der von dem ersten Wellenlängenbereich (W3) unterschiedlich ist, reflektiert, und
wobei der erste Wellenlängenbereich (W3) längere Wellenlängen als der zweite Wellenlängenbereich (W1) einschließt.

2. Polarisierender Strahlteiler (100) nach Anspruch 1, umfassend:
ein erstes Prisma (102), das eine erste Kopplungsfläche (106) aufweist,
ein zweites Prisma (104), das eine zweite Kopplungsfläche (108) aufweist, die zu der ersten Kopplungsfläche (106) zeigt, wobei das Stützelement durch das zweite Prisma (104) gebildet ist und die Kopplungsfläche des Stützelements durch die zweite Kopplungsfläche (108) gebildet ist,
wobei die Strahlteilungsbeschichtung (110) auf der zweiten Kopplungsfläche (108) angeordnet ist, und
eine Zementschicht (112), die zwischen der Strahlteilungsbeschichtung (110) und der ersten Kopplungsfläche (106) angeordnet ist.

3. Polarisierender Strahlteiler (100) nach Anspruch 2, wobei die ersten und zweiten Schichten aufeinanderfolgende Schichtpaare bilden, wobei die erste Schicht von jedem Paar näher an der zweiten Kopplungsfläche (108) als die zweite Schicht des gleichen Paars ist.

4. Polarisierender Strahlteiler (100) nach einem der vorstehenden Ansprüche, wobei die ersten Brechungsindizes in einem Bereich von 1,3 bis 4,5 liegen,
die zweiten Brechungsindizes in einem Bereich von 1,3 bis 4,5 liegen,
die ersten Schichten erste Dicken in einem Bereich von 0,1 nm bis 5000 nm aufweisen, und
die zweiten Schichten zweite Dicken in einem Bereich von 0,1 nm bis 5000 nm aufweisen.

5. Polarisierender Strahlteiler (100) nach einem der vorstehenden Ansprüche, wobei die ersten Brechungsindizes identisch sind und/oder die zweiten Brechungsindizes identisch sind.

6. Polarisierender Strahlteiler (100) nach einem der vorstehenden Ansprüche, wobei die ersten Schichten aus SiO2 hergestellt sind oder die ersten Schichten aus einem Metallfluorid oder einem Metalloxid hergestellt sind, insbesondere ausgewählt aus einer Gruppe, die Kryolith, NbF₃, Y₂O₃, CeF₃, AlF₃, LaF₃, MgF₂, YF₃, YbF₃, NaAlF₃ und Al₂O₃ einschließt.

7. Polarisierender Strahlteiler (100) nach einem der vorstehenden Ansprüche, wobei die zweiten Schichten aus ZnS hergestellt sind oder die zweiten Schichten aus einem Metallfluorid oder einem Metalloxid hergestellt sind, insbesondere ausgewählt aus einer Gruppe, die Y₂O₃, ITO, HfO₂, Ta₂O₅, ZrO₂, TiO₂ und Nb₂O₅ einschließt.

8. Polarisierender Strahlteiler (100) nach einem der Ansprüche 2 bis 7, wobei die ersten und zweiten Schichten mehrere Schichtpakete bilden, deren Reflexionen sich mit zunehmendem Abstand von der ersten Kopplungsfläche (106) zu kürzeren Wellenlängen hin verlagern.

9. Polarisierender Strahlteiler (100) nach einem der Ansprüche 2 bis 8, wobei die Zementschicht (112) einen Brechungsindex in einem Bereich von 1,0 bis 2,0 und eine Dicke in einem Bereich von 500 µm bis 10 nm aufweist.

10. Polarisierender Strahlteiler (100) nach einem der Ansprüche 2 bis 9, wobei
das erste und das zweite Prisma (102, 104) jeweils aus einem Dreikantprisma gebildet sind, wobei eine Hypotenusenseite davon die jeweilige Kopplungsfläche (106, 108) bildet.

11. Polarisierender Strahlteiler (100) nach einem der vorstehenden Ansprüche,
wobei der Kurzwellen-Teilbereich (W2) des ersten Wellenlängenbereichs (W3) eine Spektralbreite von mindestens 50 nm aufweist.

12. Polarisierender Strahlteiler (100) nach einem der Ansprüche 2 bis 11, wobei die Beschichtung (110) so konfiguriert ist, dass sie Licht, das in den polarisierenden Strahlteiler (100) durch das erste Prisma (102) eintritt, reflektiert und Licht, das in den polarisierenden Strahlteiler (100) durch das zweite Prisma (B) eintritt, überträgt.

13. Polarisierender Strahlteiler (100) nach einem der vorstehenden Ansprüche, wobei die Beschichtung (110) so konfiguriert ist, dass sie auf die Beschichtung (110) in einem Winkel von 45° einfallendes Licht überträgt und reflektiert.

## Revendications

1. Diviseur (100) de faisceau polarisant, comprenant :
un élément de support (104), de préférence constitué de verre et présentant une surface de couplage (108), et
un revêtement (110) de division de faisceau, agencé sur la surface de couplage (108) de l'élément de support (104),
dans lequel le revêtement (110) de division de faisceau comprend une pluralité de premières couches présentant des premiers indices de réfraction et une pluralité de secondes couches présentant des seconds indices de réfraction, les premières couches et les secondes couches étant agencées de façon alternée et les premiers indices de réfraction étant plus petits que les seconds indices de réfraction,
dans lequel le revêtement (110) est configuré pour transmettre la lumière d'au moins un premier état de polarisation (p-pol) dans une première plage de longueurs d'onde (W3),
**caractérisé en ce que**
le revêtement (110) est configuré pour réfléchir la lumière d'un second état de polarisation (s-pol) qui est différent du premier état de polarisation (p-pol), dans une sous-plage de longueurs d'onde courtes (W2) de la première plage de longueurs d'onde (W3),
dans lequel le revêtement (110) est configuré pour réfléchir la lumière à la fois du premier état de polarisation (p-pol) et du second état de polarisation (s-pol) dans une seconde plage de longueurs d'onde (W1) qui est différente de la première plage de longueurs d'onde (W3), et
dans lequel la première plage de longueurs d'onde (W3) inclut des longueurs d'onde plus grandes que la seconde plage de longueurs d'onde (W1).

2. Diviseur (100) de faisceau polarisant selon la revendication 1, comprenant :
un premier prisme (102) présentant une première surface de couplage (106),
un second prisme (104) présentant une seconde surface de couplage (108) qui fait face à la première surface de couplage (106), dans lequel l'élément de support est formé par le second prisme (104) et la surface de couplage de l'élément de support est formée par la seconde surface de couplage (108),
dans lequel le revêtement (110) de division de faisceau est agencé sur la seconde surface de couplage (108), et
une couche de ciment (112) est agencée entre le revêtement (110) de division de faisceau et la première surface de couplage (106).

3. Diviseur (100) de faisceau polarisant selon la revendication 2, dans lequel les premières et secondes couches forment des paires successives de couches, la première couche de chaque paire étant plus proche de la seconde surface de couplage (108) que la seconde couche de la même paire.

4. Diviseur (100) de faisceau polarisant selon l'une des revendications précédentes,
dans lequel les premiers indices de réfraction se trouvent dans une plage de 1,3 à 4,5, les seconds indices de réfraction se trouvent dans une plage de 1,3 à 4,5,
les premières couches présentent des premières épaisseurs comprises dans une plage de 0,1 nm à 5 000 nm, et
les secondes couches présentent des secondes épaisseurs comprises dans une plage de 0,1 nm à 5 000 nm.

5. Diviseur (100) de faisceau polarisant selon l'une des revendications précédentes,
dans lequel les premiers indices de réfraction sont identiques et/ou les seconds indices de réfraction sont identiques.

6. Diviseur (100) de faisceau polarisant selon l'une des revendications précédentes,
dans lequel les premières couches sont constituées de SiO2, ou les premières couches sont constituées d'un fluorure de métal ou d'un oxyde de métal, en particulier choisi dans le groupe incluant cryolite, NbF₃, Y₂O₃, CeF₃, AlF₃, LaF₃, MgF₂, YF₃, YbF₃, NaAlF₃ et Al₃O₃.

7. Diviseur (100) de faisceau polarisant selon l'une des revendications précédentes,
dans lequel les secondes couches sont constituées de ZnS, ou les secondes couches sont constituées d'un fluorure de métal ou d'un oxyde de métal, en particulier choisi dans le groupe incluant Y₂O₃, ITO, HfO₂, Ta₂O₅, ZrO₂, TiO₂ et Nb₂O₅.

8. Diviseur (100) de faisceau polarisant selon l'une des revendications 2 à 7, dans lequel les premières et secondes couches forment de multiples ensembles de couches dont les facteurs de réflexion évoluent vers des longueurs d'onde plus courtes à mesure que la distance augmente par rapport à la première surface de couplage (106).

9. Diviseur (100) de faisceau polarisant selon l'une des revendications 2 à 8, dans lequel la couche de ciment (112) présente un indice de réfraction compris dans une plage de 1,0 à 2,0 et une épaisseur comprise dans une plage de 500 µm à 10 nm.

10. Diviseur (100) de faisceau polarisant selon l'une des revendications 2 à 9, dans lequel
les premier et second prismes (102, 104) sont chacun formés à partir d'un prisme triangulaire, une face d'hypoténuse de celui-ci formant la surface de couplage respective (106, 108).

11. Diviseur (100) de faisceau polarisant selon l'une quelconque des revendications précédentes,
dans lequel la sous-plage de longueurs d'onde courtes (W2) de la première plage de longueurs d'onde (W3) présente une largeur spectrale d'au moins 50 nm.

12. Diviseur (100) de faisceau polarisant selon l'une des revendications 2 à 11,
dans lequel le revêtement (110) est configuré pour réfléchir la lumière entrant dans le diviseur (100) de faisceau polarisant à travers le premier prisme (102) et pour transmettre la lumière entrant dans le diviseur (100) de faisceau polarisant à travers le second prisme (B).

13. Diviseur (100) de faisceau polarisant selon l'une des revendications précédentes,
dans lequel le revêtement (110) est configuré pour transmettre et réfléchir la lumière incidente sur le revêtement (110) selon un angle de 45°.
